# EUROPEAN PATENT APPLICATION

(11) **EP 3 273 362 A1**
(43) Date of publication of application: **24.01.2018**
(21) Application number: 16858633.7
(22) Date of filing: 23.05.2016
(51) Int. Cl.: G06F 17/30

(54) **WEBPAGE ACCESS METHOD, APPARATUS, DEVICE AND NON-VOLATILE COMPUTER STORAGE MEDIUM**

(30) Priority: 30.10.2015 CN 201510725908
(71) Applicant: Baidu Online Network Technology (Beijing) Co., Ltd., Beijing 100085 (CN)
(72) Inventor: PANG, Kai, Beijing 100085 (CN)
(74) Representative: dompatent von Kreisler Selting Werner - Partnerschaft von Patent- und Rechtsanwälten mbB
(86) International application number: PCT/CN2016/082981
(87) International publication number: WO 2017/071189

(57) **Abstract**

The present disclosure provides a method and apparatus for accessing a webpage, an apparatus and a non-volatile computer storage medium. In embodiments of the present disclosure, it is determined that the access to the webpage is limited, and then the information of the proxy server is obtained so that the webpage can be accessed by using the information of the proxy server. Since the information of the proxy server can be obtained automatically, the user needn't manually search for the website publishing the proxy server, the operations are simple, the success rate is high and therefore the webpage-accessing efficiency and reliability therefore can be improved.

## Description

The present disclosure claims priority to the Chinese patent application No.201510725908.3 entitled "Method and Apparatus for Accessing Webpage" filed on the filing date October 30, 2015, the entire disclosure of which is hereby incorporated by reference in its entirety.

### Field of the Disclosure

The present disclosure relates to Internet technologies, and particularly to a method and apparatus for accessing a webpage, an apparatus and a non-volatile computer storage medium.

### Background of the Disclosure

As the Internet industry develops, information provided by webpage content gets increasingly richer, and data content displayed on the webpages becomes richer and richer accordingly. During access to webpages, since websites such as foreign websites or school websites to which some webpages belong are access-limiting websites, these webpages cannot be accessed normally.

In this case, the user needs to use a relevant key word such as a website publishing a proxy server to perform a search operation to obtain an entrance to the website publishing the proxy server. The user accesses the obtained website publishing the proxy server, and uses the proxy server published by it to respectively perform access proxy setting so that an available proxy server can be used to access these webpages. The so doing causes complicated operations, long operation duration and low success rate and therefore reduces the website-accessing efficiency and reliability.

### Summary of the Disclosure

A plurality of aspects of the present disclosure provide a method and apparatus for accessing a webpage, an apparatus and a non-volatile computer storage medium, to improve the efficiency and reliability of access to websites.

According to an aspect of the present disclosure, there is provided a method for accessing a webpage, comprising:
determining that access to a webpage is limited;
obtaining information of a proxy server;
using the information of the proxy server to access the webpage.

The above aspect and any possible implementation mode further provide an implementation mode: the determining that access to a webpage is limited comprises:
obtaining a request to access the webpage;
determining that the webpage cannot be accessed according to the request to access the webpage;
according to an access-limiting listing, determining that the website to which the webpage belongs is an access-limiting website; and
determining that the access to the webpage is limited.

The above aspect and any possible implementation mode further provide an implementation mode: the obtaining information of a proxy server comprises:
obtaining the information of the proxy server according to a webpage identifier of the webpage.

The above aspect and any possible implementation mode further provide an implementation mode: before obtaining information of the proxy server, the method further comprises:
using a web crawler to obtain a proxy server set which includes information of each proxy server in at least one available proxy server to obtain the information of the proxy server according to the proxy server set.

The above aspect and any possible implementation mode further provide an implementation mode: after using the web crawler to obtain the proxy server set, the method further comprises:
performing quality verification for said at least one proxy server;
performing filtration processing for the information of the proxy server that does not pass the quality verification.

According to another aspect of the present disclosure, there is provided an apparatus for accessing a webpage, comprising:
an accessing unit configured to determine that access to a webpage is limited;
an obtaining unit configured to obtain information of a proxy server;
the accessing unit further configured to use the information of the proxy server to access the webpage.

The above aspect and any possible implementation mode further provide an implementation mode: the accessing unit is further be configured to
obtain a request to access the webpage;
determine that the webpage cannot be accessed according to the request to access the webpage;
according to an access-limiting listing, determine that the website to which the webpage belongs is an access-limiting website; and
determine that the access to the webpage is limited.

The above aspect and any possible implementation mode further provide an implementation mode: the obtaining unit is specifically configured to
obtain the information of the proxy server according to a webpage identifier of the webpage.

The above aspect and any possible implementation mode further provide an implementation mode: the apparatus further comprises a collecting unit configured to
use a web crawler to obtain a proxy server set which includes information of each proxy server in at least one available proxy server to obtain the information of the proxy server according to the proxy server set.

The above aspect and any possible implementation mode further provide an implementation mode: the collecting unit is further configured to
perform quality verification for said at least one proxy server, and
perform filtration processing for the information of the proxy server that does not pass the quality verification.

According to a further aspect of the present disclosure, there is provided an apparatus, comprising
one or more processors;
a memory;
one or more programs stored in the memory and configured to execute the following operations when executed by the one or more processors:
determining that access to a webpage is limited;
obtaining information of a proxy server;
using the information of the proxy server to access the webpage.

According to a further aspect of the present disclosure, there is provided a non-volatile computer storage medium in which one or more programs are stored, an apparatus being enabled to execute the following operations when said one or more programs are executed by the apparatus:
determining that access to a webpage is limited;
obtaining information of a proxy server;
using the information of the proxy server to access the webpage.

As known from the above technical solutions, in embodiments of the present disclosure, it is determined that the access to the webpage is limited, and then the information of the proxy server is obtained so that the webpage can be accessed by using the information of the proxy server. Since the information of the proxy server can be obtained automatically, the user needn't manually search for the website publishing the proxy server, the operations are simple, the success rate is high and therefore the webpage-accessing efficiency and reliability therefore can be improved.

In addition, with the technical solution provided by the present disclosure being employed, the quality of the obtained proxy server can be effectively ensured by performing quality verification for each proxy server in at least one available proxy server included by the obtained proxy server set, and then by performing filtration processing for the information of the proxy server that does not pass the quality verification.

In addition, with the technical solution provided by the present disclosure being employed, the user needn't manually search for the website publishing the proxy server, the website is completely transparent for the user, and the user's access experience can be improved effectively.

### Brief Description of Drawings

To describe technical solutions of embodiments of the present disclosure more clearly, figures to be used in the embodiments or in depictions regarding the prior art will be described briefly. Obviously, the figures described below are only some embodiments of the present disclosure. Those having ordinary skill in the art appreciate that other figures may be obtained from these figures without making inventive efforts.
Fig. 1 is a flow chart of a method for accessing a webpage according to an embodiment of the present disclosure;
Fig. 2 is a block diagram of an apparatus for accessing a webpage according to another embodiment of the present disclosure;
Fig. 3 is a block diagram of an apparatus for accessing a webpage according to another embodiment of the present disclosure.

### Detailed Description of Preferred Embodiments

To make objectives, technical solutions and advantages of embodiments of the present disclosure clearer, technical solutions of embodiment of the present disclosure will be described clearly and completely with reference to figures in embodiments of the present disclosure. Obviously, embodiments described here are partial embodiments of the present disclosure, not all embodiments. All other embodiments obtained by those having ordinary skill in the art based on the embodiments of the present disclosure, without making any inventive efforts, fall within the protection scope of the present disclosure.

It may be understood that the webpage involved in the present disclosure may also be called a web page, and it may be a web page written based on HyperText Markup Language (HTML), namely HTML webpgage, or a web page written based on HTML and Java, namely, Java server webpage (JSP), or a web page written in other languages. This is not particularly limited in the present embodiment. The web page may include one or more webpage tags such as HyperText Markup Language (HTML) tag and JSP tag. A defined display block is called a webpage element, for example, word, picture, hyperlink, button, input box and drop-down box.

It needs to be appreciated that the terminals involved in the embodiments of the present disclosure comprise but are not limited to a mobile phone, a Personal Digital Assistant (PDA), a wireless handheld device, a tablet computer, a Personal Computer (PC), an MP3 player, an MP4 player, and a wearable device (e.g., a pair of smart glasses, a smart watch, or a smart bracelet).

In addition, the term "and/or" used in the text is only an association relationship depicting associated objects and represents that three relations might exist, for example, A and/or B may represents three cases, namely, A exists individually, both A and B coexist, and B exists individually. In addition, the symbol "/" in the text generally indicates associated objects before and after the symbol are in an "or" relationship.

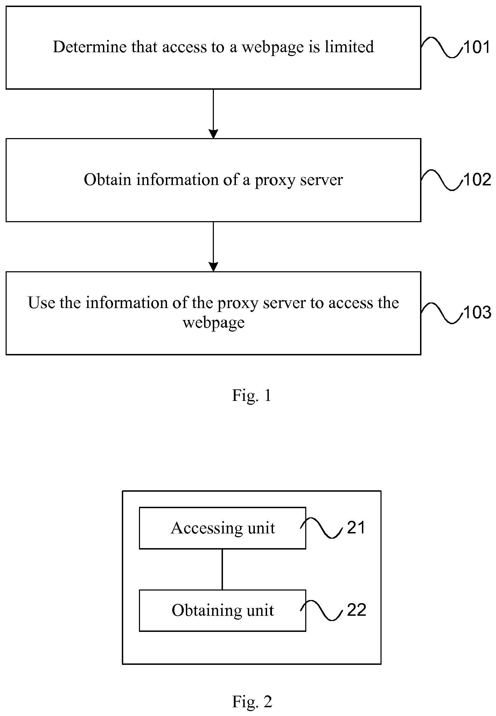

Fig. 1 is a flow chart of a method for accessing a webpage according to an embodiment of the present disclosure.
101: Determining that access to a webpage is limited.
102: Obtaining information of a proxy server.
103: Using the information of the proxy server to access the webpage.

It needs to be appreciated that subjects for executing 101-103 may partially or totally be an applications located in a local terminal, for example, input method application, mobile phone Baidu application and mobile phone Taobao application, or a function unit such as a plug-in or Software Development Kit (SDK) arranged in an application located at the local terminal, or a processing engine located in a network-side server, or a distributed type system located on the network side. This is not particularly limited in the present embodiment.

It may be understood that the application may be a native application (nativeAPP) installed on the terminal, for example, a browser application or mobile phone Baidu application, or a web program (webApp) of a browser on the terminal. This is not particularly limited in the present embodiment.

As such, it is determined that access to a webpage is limited, and then information of a proxy server is obtained so that the information of the proxy server can be used to access the webpage. Since the information of the proxy server can be obtained automatically, the user needn't manually search for the website publishing the proxy server, the operations are simple, the success rate is high and therefore the webpage-accessing efficiency and reliability can be improved.

It needs to be appreciated that the webpage involved in the present embodiment may be a webpage of a PC website, or a webpage of a mobile website. This is not particularly limited in the present embodiment.

At present, when an application such as a browser or Baidu APP accesses a webpage, it is necessary to first download webpage main resource, and then parse and render the webpage main resource. When a Uniform Resource Locator (URL) of a webpage sub-resource cited in the webpage main resource is parsed, the webpage sub-resource begins to be downloaded, and the webpage main resource is further rendered according to the webpage sub-resource. If the website to which the webpage belongs is an access-limiting website, the webpage main resource cannot be downloaded, and then prompt information indicating failure to access the webpage is output directly.

Optionally, in a possible implementation mode of the present embodiment, in 101, it is specifically feasible to obtain a request to access the webpage, determine that the webpage cannot be accessed according to the request to access the webpage, and according to an access-limiting listing, determine that the website to which the webpage belongs is an access-limiting website, and thereby determine that the access to the webpage is limited.

After a webpage access request triggered by the user is obtained, the access request is sent to a server of the website to which the webpage belongs. If the website is an access-limiting website, the access request is intercepted and cannot be sent to the server of the website. Then, the prompt information indicating failure to access the webpage is received. At this time, it is possible to determine that the webpage cannot be accessed.

Since there are many reasons for failure to access the webpage, after the failure to access the webpage is determined, it is further necessary to query in the access-limiting listing to determine whether the website to which the webpage belongs is the access-limiting website. If the website to which the webpage belongs is in the access-limiting listing, it may be determined that the website to which the webpage belongs is the access-limiting website.

To sum up, since the webpage to be accessed by the user cannot be accessed and the website to which the webpage belongs is the access-limiting website, it may be determined that the access to the webpage is limited.

In the present disclosure, in 102, the obtained information of proxy server may include but is not limited to a Uniform Resource Locator (URL) or Uniform Resource Name (URN), an IP address or other access identifiers of the proxy server. This is not particularly limited in the present embodiment.

Optionally, in a possible implementation mode of the present embodiment, in 102, it is specifically feasible to obtain information of one proxy server, or information of a plurality of proxy servers.

If information of one proxy server is obtained, the information of this proxy server is used to execute the subsequent 103.

If information of a plurality of proxy servers is obtained, it is feasible to employ a preset selection policy to select information of one proxy server, and then the information of this proxy server may be used to execute the subsequent 103. If the access to the webpage is still limited, information of next proxy server is selected to continue the preceding operation until the access to the webpage is not limited any more.

Optionally, in a possible implementation mode of the present embodiment, in 102, it is specifically feasible to obtain the information of the proxy server according to a webpage identifier of the webpage. Specifically, it is feasible to pre-store a mapping relationship of one webpage and information of an available proxy server to associate the webpage with the available proxy server. As such, it is possible to obtain the information of the proxy server corresponding to the webpage identifier using the mapping relationship according to the webpage identifier of the webpage, and ensure usability of the obtained information of the proxy server.

In a specific implementation procedure, it is specifically feasible to correspondingly store the identifier of the webpage and the information of the proxy server in a database or file system.

Specifically, it is feasible to correspondingly store the identifier of the webpage and the information of the proxy server corresponding to the identifier of the webpage in a database or file system.

Wherein, the identifier of the webpage may include but not limited to a parameter name of the identifier of the webpage and a parameter value of the identifier of the webpage. This is not particularly limited in the present embodiment. The information of the proxy server may include but not limited to a parameter name of the information of the proxy server and a parameter value of the information of the proxy server. This is not particularly limited in the present embodiment.

Wherein, the database may employ a relationship type database such as Oracle database, DB2 database, Structured Query Language (SQL) server database or MySQL database, or may further employ a Key-Value type database such as SQL (Not Only SQL) NoSQL database or Redis database. This is not particularly limited in the present embodiment.

For example, it is specifically feasible to correspondingly store the parameter name and parameter value of the identifier of each webpage and the parameter value of the information of the proxy server corresponding to the identifier of the webpage in the database or the file system. If it is possible to take the parameter value of the information of the proxy server corresponding to the identifier of each webpage as a key, and take the parameter name and parameter value of the identifier of the webpage as a value, the two are correspondingly stored in the Key-Value database.

Or, for another example, it is specifically feasible to correspondingly store the parameter name and parameter value of the identifier of each webpage and the parameter name and parameter value of the information of the proxy server corresponding to the identifier of the webpage in the database or the file system. If it is possible to take the parameter name and parameter value of the information of the proxy server corresponding to the identifier of each webpage as a key, and take the parameter name and parameter value of the identifier of the webpage as a value, the two are correspondingly stored in the Key-Value database.

It needs to be appreciated that while storing the identifier of the webpage and the information of the proxy server, it is further necessary to record at least one item of time of storage of the first time (Init_time) and time of subsequent updated storage (update_time) to satisfy general requirements of subsequent management operations.

Specifically, the database or the file system may be deployed on a storage device of the terminal.

For example, the storage device of the terminal may be a low-speed storage device and may specifically be a hard disk of a computer system, or a non-run memory namely a physical memory of a mobile phone, for example, a Read-Only Memory (ROM), a memory card or the like. This is not particularly limited in the present embodiment.

Or, for another example, the storage device of the terminal may further be a fast-speed storage device, and may specifically be a memory of a computer system, or a running memory, namely, a system memory such as a Random Access Memory (RAM) of the mobile phone. This is not particularly limited in the present embodiment.

Optionally, in a possible implementation mode of the present embodiment, before 102, it is further feasible to use a web crawler to obtain a proxy server set which includes information of each proxy server in at least one available proxy server to obtain the information of the proxy server according to the proxy server set.

After obtaining the proxy server set using the web crawler, it is further feasible to perform quality verification for said at least one proxy server, and thereby perform filtration processing for the information of the proxy server that does not pass the quality verification. As such, the quality of the obtained proxy server can be effectively ensured by performing quality verification for each proxy server in at least one available proxy server included by the obtained proxy server set, and then by performing filtration processing for the information of the proxy server that does not pass the quality verification.

The so-called quality verification refers to verification of the proxy server in terms of stability and timeliness to ensure the proxy server useable. It may be appreciated that the quality verification may be performed regularly, for example, once each day or once each week, so that the quality of the obtained proxy server can be further ensured.

In the present embodiment, it is determined that the access to the webpage is limited, and then the information of the proxy server is obtained so that the webpage can be accessed by using the information of the proxy server. Since the information of the proxy server can be obtained automatically, the user needn't manually search for the website publishing the proxy server, the operations are simple, the success rate is high and the webpage-accessing efficiency and reliability therefore can be improved.

In addition, with the technical solution provided by the present disclosure being employed, the quality of the obtained proxy server can be effectively ensured by performing quality verification for each proxy server in at least one available proxy server included by the obtained proxy server set, and then by performing filtration processing for the information of the proxy server that does not pass the quality verification.

In addition, with the technical solution provided by the present disclosure being employed, the user needn't manually search for the website publishing the proxy server, the website is completely transparent for the user, and the user's access experience can be improved effectively.

As appreciated, for ease of description, the aforesaid method embodiments are all described as a combination of a series of actions, but those skilled in the art should appreciated that the present disclosure is not limited to the described order of actions because some steps may be performed in other orders or simultaneously according to the present disclosure. Secondly, those skilled in the art should appreciate the embodiments described in the description all belong to preferred embodiments, and the involved actions and modules are not necessarily requisite for the present disclosure.

In the above embodiments, different emphasis is placed on respective embodiments, and reference may be made to related depictions in other embodiments for portions not detailed in a certain embodiment.

Fig. 2 is a block diagram of an apparatus for accessing the webpage according to another embodiment of the present disclosure. The apparatus for accessing the webpage according to the present embodiment may comprise an accessing unit 21 and an obtaining unit 22, wherein the accessing unit 21 is configured to determine that access to a webpage is limited; the obtaining unit 22 is configured to obtain information of a proxy server; the accessing unit 21 is further configured to use the information of the proxy server to access the webpage.

It needs to be appreciated that apparatus for accessing the webpage according to the present embodiment may partially or totally be an application located in a local terminal, or a function unit such as a plug-in or Software Development Kit (SDK) arranged in an application located at the local terminal, or a search engine located in a network-side server, or a distributed type system located on the network side. This is not particularly limited in the present embodiment.

It may be understood that the application may be a native application (nativeAPP) installed on the terminal, or a web program (webApp) of a browser on the terminal. This is not particularly limited in the present embodiment.

Optionally, in a possible implementation mode of the present embodiment, the accessing unit 21 is further be configured to obtain a request to access the webpage; determine that the webpage cannot be accessed according to the request to access the webpage; according to an access-limiting listing, determine that the website to which the webpage belongs is an access-limiting website; and determine that the access to the webpage is limited.

Optionally, in a possible implementation mode of the present embodiment, the obtaining unit 22 is specifically configured to obtain information of the proxy server according to a webpage identifier of the webpage.

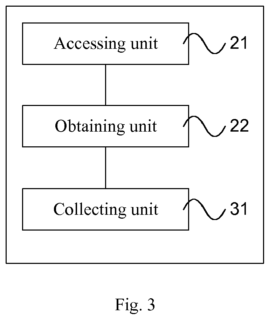

Optionally, in a possible implementation mode of the present embodiment, as shown in Fig. 3, the apparatus for accessing the webpage according to the present embodiment may further comprise a collecting unit 31 configured to use a web crawler to obtain a proxy server set which includes information of each proxy server in at least one available proxy server to obtain the information of the proxy server according to the proxy server set.

Furthermore, the collecting unit 31 is further configured to perform quality verification for said at least one proxy server, and perform filtration processing for the information of the proxy server that does not pass the quality verification.

It needs to be appreciated that the method in the embodiment corresponding to Fig. 1 may be implemented by the apparatus for accessing the webpage according to the present embodiment. Reference may be made to relevant resources in the embodiment corresponding to Fig. 1 for detailed description, which will not be detailed any longer here.

In the present embodiment, the accessing unit determines that the access to the webpage is limited, and then the obtaining unit obtains the information of the proxy server so that the accessing unit can access the webpage by using the information of the proxy server. Since the information of the proxy server can be obtained automatically, the user needn't manually search for the website publishing the proxy server, the operations are simple, the success rate is high and the webpage-accessing efficiency and reliability therefore can be improved.

In addition, with the technical solution provided by the present disclosure being employed, the quality of the obtained proxy server can be effectively ensured by the collecting unit performing quality verification for each proxy server in at least one available proxy server included by the obtained proxy server set, and then by performing filtration processing for the information of the proxy server that does not pass the quality verification.

In addition, with the technical solution provided by the present disclosure being employed, the user needn't manually search for the website publishing the proxy server, the website is completely transparent for the user, and the user's access experience can be improved effectively.

Those skilled in the art can clearly understand that for purpose of convenience and brevity of depictions, reference may be made to corresponding procedures in the aforesaid method embodiments for specific operation procedures of the system, apparatus and units described above, which will not be detailed any more.

In the embodiments provided by the present disclosure, it should be understood that the revealed system, apparatus and method can be implemented in other ways. For example, the above-described embodiments for the apparatus are only exemplary, e.g., the division of the units is merely logical one, and, in reality, they can be divided in other ways upon implementation. For example, a plurality of units or components may be combined or integrated into another system, or some features may be neglected or not executed. In addition, mutual coupling or direct coupling or communicative connection as displayed or discussed may be indirect coupling or communicative connection performed via some interfaces, means or units and may be electrical, mechanical or in other forms.

The units described as separate parts may be or may not be physically separated, the parts shown as units may be or may not be physical units, i.e., they can be located in one place, or distributed in a plurality of network units. One can select some or all the units to achieve the purpose of the embodiment according to the actual needs.

Further, in the embodiments of the present disclosure, functional units can be integrated in one processing unit, or they can be separate physical presences; or two or more units can be integrated in one unit. The integrated unit described above can be implemented in the form of hardware, or they can be implemented with hardware plus software functional units.

The aforementioned integrated unit in the form of software function units may be stored in a computer readable storage medium. The aforementioned software function units are stored in a storage medium, including several instructions to instruct a computer device (a personal computer, server, or network equipment, etc.) or processor to perform some steps of the method described in the various embodiments of the present disclosure. The aforementioned storage medium includes various media that may store program codes, such as U disk, removable hard disk, read-only memory (ROM), a random access memory (RAM), magnetic disk, or an optical disk.

Finally, it is appreciated that the above embodiments are only used to illustrate the technical solutions of the present disclosure, not to limit the present disclosure; although the present disclosure is described in detail with reference to the above embodiments, those having ordinary skill in the art should understand that they still can modify technical solutions recited in the aforesaid embodiments or equivalently replace partial technical features therein; these modifications or substitutions do not make essence of corresponding technical solutions depart from the spirit and scope of technical solutions of embodiments of the present disclosure.

## Claims

1. A method for accessing a webpage, comprising:
determining that access to a webpage is limited;
obtaining information of a proxy server;
using the information of the proxy server to access the webpage.

2. The method according to claim 1, wherein the determining that access to a webpage is limited comprises:
obtaining a request to access the webpage;
determining that the webpage cannot be accessed according to the request to access the webpage;
according to an access-limiting listing, determining that the website to which the webpage belongs is an access-limiting website;
determining that the access to the webpage is limited.

3. The method according to claim 1 or 2, wherein the obtaining information of the proxy server comprises:
obtaining the information of the proxy server according to a webpage identifier of the webpage.

4. The method according to any of claims 1-3, wherein before obtaining the information of the proxy server, the method further comprises:
using a web crawler to obtain a proxy server set which includes information of each proxy server in at least one available proxy server to obtain the information of the proxy server according to the proxy server set.

5. The method according to claim 4, wherein after using the web crawler to obtain the proxy server set, the method further comprises:
performing quality verification for said at least one proxy server;
performing filtration processing for the information of the proxy server that does not pass the quality verification.

6. An apparatus for accessing a webpage, comprising:
an accessing unit configured to determine that access to a webpage is limited;
an obtaining unit configured to obtain information of a proxy server;
the accessing unit further configured to use the information of the proxy server to access the webpage.

7. The apparatus according to claim 6, wherein the accessing unit is further be configured to
obtain a request to access the webpage;
determine that the webpage cannot be accessed according to the request to access the webpage;
according to an access-limiting listing, determine that the website to which the webpage belongs is an access-limiting website;
determine that the access to the webpage is limited.

8. The apparatus according to claim 6 or 7, wherein the obtaining unit is specifically configured to
obtain the information of the proxy server according to a webpage identifier of the webpage.

9. The apparatus according to any of claims 6-8, wherein the apparatus further comprises a collecting unit configured to
use a web crawler to obtain a proxy server set which includes information of each proxy server in at least one available proxy server to obtain the information of the proxy server according to the proxy server set.

10. The apparatus according to claim 9, wherein the collecting unit is further configured to
perform quality verification for said at least one proxy server, and
perform filtration processing for the information of the proxy server that does not pass the quality verification.

11. An apparatus, comprising:
one or more processors;
a memory;
one or more programs stored in the memory and configured to execute the following operations when executed by the one or more processors:
determining that access to a webpage is limited;
obtaining information of a proxy server;
using the information of the proxy server to access the webpage.

12. A non-volatile computer storage medium in which one or more programs are stored, an apparatus being enabled to execute the following operations when said one or more programs are executed by the apparatus:
determining that access to a webpage is limited;
obtaining information of a proxy server;
using the information of the proxy server to access the webpage.
